Europäisches Patentamt

European Patent Office

Office européen des brevets

(19)

(11) **EP 1 580 689 A2**

(12) ## EUROPEAN PATENT APPLICATION

(43) Date of publication:
**28.09.2005 Bulletin 2005/39**

(51) Int Cl.7: **G06T 5/00**

(21) Application number: **05006080.5**

(22) Date of filing: **19.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **25.03.2004 JP 2004089381**

(71) Applicant: **NORITSU KOKI CO., LTD.**
**Wakayama-ken (JP)**

(72) Inventor: **Kita, Koji**
**Wakayama-shi Wakayama-ken (JP)**

(74) Representative: **Kaiser, Magnus et al**
**Lemcke, Brommer & Partner**
**Patentanwälte**
**Bismarckstrasse 16**
**76133 Karlsruhe (DE)**

(54) **Suppressing granular noise in image**

(57) An image processing method for suppressing granular noise in photographic image data comprises steps of selecting a target pixel from a group of pixels constituting the photographic image data; selecting a plurality of directions extending from the target pixel; selecting a pair of basis pixels located on each of the selected plural directions, with one pixel located on one side of the target pixel and the other pixel located on the opposite side of the target pixel; calculating an unevenness degree of a pixel value of the target pixel relative to pixel values of the basis pixels; obtaining, as a maximum unevenness degree, a maximum value of unevenness degrees calculated for all of the plurality of directions; and calculating a corrected pixel value for the target pixel based on the pixel values of the target pixel and the basis pixels and on the maximum unevenness degree. The invention further relates to software and an image processing system for implementing the method.

**Fig.1**

EP 1 580 689 A2

## EP 1 580 689 A2

### Description

### Background of the Invention

The present invention relates to a technique for suppressing noise in image data. More particularly, the invention relates to a technique for suppressing granular noise present in photographic image data obtained by digitization of an image, in particular, such data obtained by a film scanner.

Generally, a standard photographic film has a grain (pixel) density on the order of 2500 dpi. The commonly employed photographic film (negative) has a photographic image area of: 36 mm x 24 mm. Hence, its photographic image has the total of 3445 x 2362 pixels (grains). On the other hand, a film scanner employed in the most recent digital image printing system referred to as "digital mini-lab" has an image resolution exceeding 2000 dpi. This means that the film scanner can input a photographic image from the photographic film with a resolution substantially equal to that of the film. Hence, the printing system using such scanner can make a print which reproduces a photographic image with substantially same image resolution as that of the original, i.e. the film. For quality improvement of the photographic image, a so-called sharpness enhancing operation needs to be done for enhancing the contour or the like in the photographic image. However, if this sharpness enhancing operation is performed on photographic image data obtained by such high-quality film scanner with the grain (pixel) level resolution equivalent to that of the photographic negative, the operation enhances not only the photographic image contour, but also graininess of the grains of the photographic film, thus resulting in unsightly image, depending on the image characteristics of the photographic image. Such enhanced graininess leading to unsightly image is referred to herein as "granular noise." The granular noise, especially if present in a human skin area, presents a negative effect to the photographic image quality. To reduce such granular noise, a blurring (smoothing) operation will be effected. This operation results, however, in blurring of the contour, in addition to granular noise reduction, thus compromising the effect of the sharpness enhancing operation effected previously.

As a solution to the above problem, there is known a technique (from e.g. Japanese Patent Application "Kokai" No. 2003-132352 (see its "Abstract" and Fig. 1)), comprising the steps of: obtaining from image data sharpened image data with enhancement of each pixel of the data; obtaining also from the image data smoothed image data with smoothing of each pixel of the data; setting a sharpness-mixing ratio correlation such that the mixing ratio of the smoothed image data will be increased for a most frequently occurring value of sharpness calculated for each pixel of the image data and obtaining corrected data for the image data by mixing the sharpened image data and the smoothed image data for each pixel in accordance with the sharpness-mixing ratio correlation. Namely, in this technique, sharpness of the image is detected and then, based on this detected sharpness, the sharpening operation and the smoothing operation are effected selectively. However, as it is difficult to determine the mixing ratio between the sharpening operation and the smoothing operation, this technique has not fully solved the problem.

As a different solution, another technique is known (from e.g. U.S. patent publication No. 2002-0051569, see its Fig. 1). In this technique, source image data is separated between density data and color data; then a ratio between a smoothing operation for color data and a smoothing operation for density data is varied in accordance with variation of the density data in two-dimensional coordinate space. In doing so, in view of the fact that the data relating to a contour of the image is contained more in the density data than in the color image data, as the image data moves from a flat (even) area of the image toward a contour area of the same, a ratio of density noise removal is progressively decreased to '0' (zero) and also the density noise removing operation is terminated earlier than the color noise removing operation. In essence, this technique effects the smoothing operation selectively on a flat area of the image. If a conventional sharpness enhancing operation is effected thereafter as a post operation, it is possible to obtain enhanced sharpness at the image contour with certain suppression of granular noise. However, the contour line has a certain width due to inaccurate focus or a shade, the above technique will result in weak smoothing on the contour line per se and/or its periphery. Hence, the granular noise will remain at such portion.

Further, as a smoothing operation, it conceivable to replace a pixel value of a certain target pixel by an average pixel value of a group of (n x n) pixels present around the target pixel (i.e. the technique using a two-dimensional spatial filter). With this technique, however, even though in actuality, only the one pixel (i.e. target pixel) included in the peripheral area constitutes the noise, such smoothing operation as above will result in an image in which the effect of the noise pixel is "extended" over to the entire peripheral area thereof including the other pixels which do not constitute the noise. As a result, this technique tends to result in unnecessarily flat (even) image.

### Summary of the Invention

In view of the above-described state of the art, a primary object of the present invention is to provide an image processing technique capable of suppressing granular noise while avoiding the above-described problems as much as possible.

For accomplishing the above-noted object, according to one aspect of the present invention, there is proposed an image processing method for suppressing granular noise in photographic image data, the method comprising the steps of:: selecting a target pixel from a group of pixels constituting the photographic image data; selecting a plurality of directions extending from the target pixel; selecting a pair of basis pixels located on each of the selected plural directions, with one pixel located on one side of the target pixel and the other pixel located on the opposite side of the target pixel; calculating an unevenness degree of a pixel value of the target pixel relative to pixel values of the basis pixels; obtaining, as a maximum unevenness degree, a maximum value of unevenness degrees calculated for all of the plurality of directions; and calculating a corrected pixel value for the target pixel based on the pixel values of the target pixel and the basis pixels and on the maximum unevenness degree.

With this method, the smoothing operation is effected along a particular direction. Hence, it has become possible to restrict granular noise on a contour line or in the periphery thereof, which was difficult by the conventional image processing method using a two-dimensional spatial filter.

Further and other features and advantages of the present invention will become apparent upon reading the following detailed description of preferred embodiments thereof with reference to the accompanying drawings.

## Brief Description of the Drawings

Fig. 1 is an explanatory view schematically illustrating a granular noise suppressing image processing technique relating to the present invention,

Fig. 2 is another explanatory view schematically illustrating the granular noise suppressing image processing technique relating to the present invention,

Fig. 3 shows an outer appearance of a photographic printing system incorporating an image processing unit employing the granular noise suppressing image processing technique relating to the invention,

Fig. 4 is a schematic view schematically showing a print station of the photographic printing system,

Fig. 5 is a functional block diagram illustrating functional blocks formed within a controller of the photographic printing system,

Fig. 6 is a functional block diagram showing functional blocks of a granular noise suppressing means, and

Fig. 7 is a flowchart illustrating a process of a granular noise suppressing operation.

## Detailed Description of the Preferred Embodiments

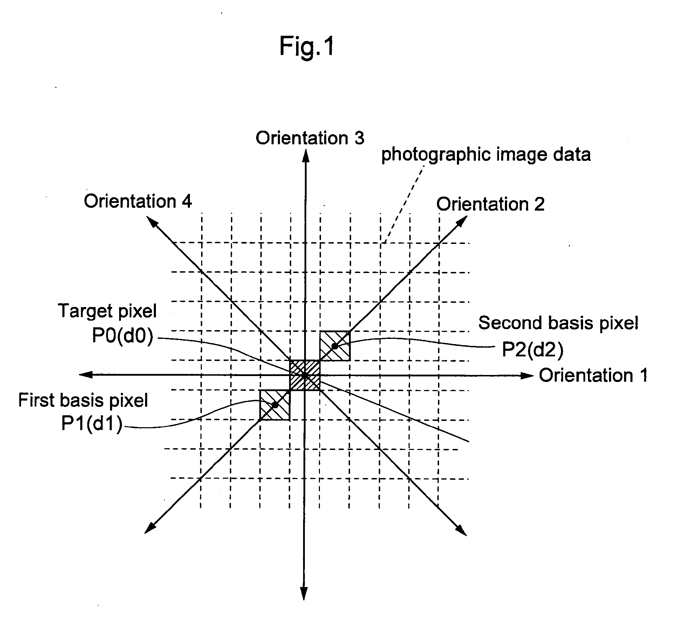

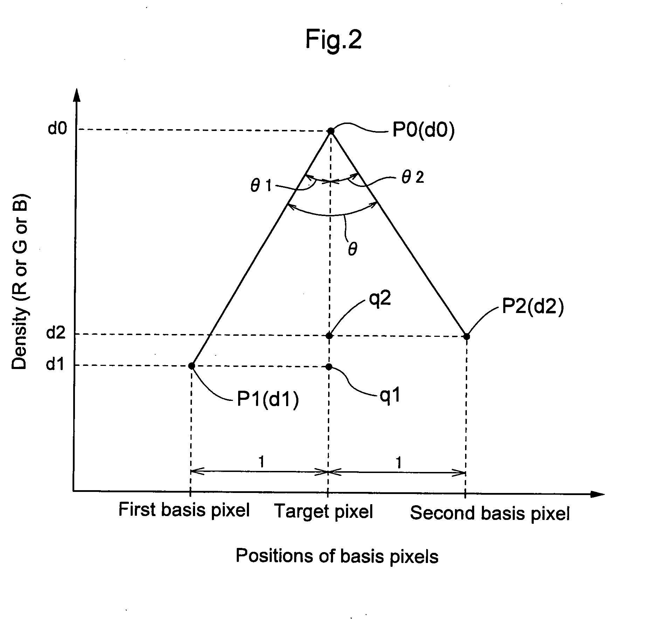

A granular noise suppressing image processing technique relating to the invention will be described with reference to Figs. 1 and 2. As will be detailed below, an unevenness degree of a target pixel to be corrected relative to a pair of basis pixels (pixels for use in the arithmetic operation) located adjacent to and on the opposite sides of the target pixel along a certain orientation is obtained based on an "angle" formed by the two basis pixels relative to the target pixel therebetween.

As shown in Fig. 1, a plurality of pixels constituting photographic image data acquired by means of e.g. a film scanner are mapped in the form of a two-dimensional matrix. From these pixels, a target pixel to be subjected to a correction process will be selected one after another. Then, four orientations all extending through the selected target pixel will be defined as follows. Direction 1 (first orientation) is defined as a horizontal line extending to the right and left directions from the target pixel. Direction 2 (second orientation) is defined as a straight line rotated counter-clockwise by 45 degrees from Direction 1. Direction 3 (third orientation) is defined as a vertical line extending from the target pixel. Direction 4 (fourth orientation) is a straight line with rightward inclination, i.e. rotated counter-clockwise by 45 degrees from Direction 3. Then, for and along each of these four orientations, a first basis pixel and a second basis pixel located adjacent to and on the opposite sides of the target pixel will be selected , i.e. with one basis pixel on one side of the target pixel and the other of the two on the other side of the target pixel. As shown in Fig. 1, in the following discussion, the Direction 2 is taken for example. And, in this example, the closeness (or the "distance") between the target pixel and each basis pixel is set as one pixel, meaning no pixel is present therebetween. Therefore, the first basis pixel P1 is the pixel located on the left-lower side immediately adjacent the target pixel P0, and the second basis pixel P2 is the pixel located on the right-upper side immediately adjacent the target pixel, respectively. This closeness will be appropriately selected, depending on the resolution used in inputting the source photographic image data and the type of the film, or, the grain size of the photographic image data.

After the above-described selections of the target pixel P0 and the first and second basis pixels P1 and P2, then, as shown in Fig. 2, the method uses a line graph having a vertical axis representing positions on Direction 2 and a vertical axis representing density values. So that each pixel has a position (along Direction 2) shown along the horizontal axis and a density value shown along the vertical axis. On the horizontal axis of the graph, as shown, the distance or the closeness from the target pixel P0 to the first basis pixel P1 and that between the target pixel P0 to the second basis pixel P2 are both "1". In the case of a color image, the image has a density value for each of the R, G, B components. In this regard, the granular noise suppressing operation of the invention will be effected independently for each and every separate color component. In Fig. 2, the first basis pixel has a density point shown at P1 with a density value shown at d1. Similarly, the second basis pixel has a density point shown at P2 with a density value shown at d2., and the target pixel has a density point shown at P0 with a density value shown at d0, respectively. Then, a angle θ formed by the line segment P0P1 and the line segment P0P2 is defined as a basis for an unevenness degree of this target pixel. An arithmetic formula to obtain this angle θ can be simplified if this angle θ is obtained as a sum of an apex angle θ1 of a right triangle P0P1q1 and an apex angle θ2 of a right triangle P0P2q2. As shown in Fig. 2, the angle θ1 is obtained by the arccosine of (segment P0q1)/(segme P0P1 The arithmetic formula for angle θ1 is represented by Formula (1) below. In the following discussion, for the sake of simplicity, all angles will be expressed in degrees and not in radians.

$$\theta 1 = \cos^{-1}\left( \frac{\overline{P0q1}}{\overline{P0P1}} \right)$$
$$= \cos^{-1}\left( \frac{|d0-d1|}{\sqrt{1^2+(d0-d1)^2}} \right) \tag{1}$$

Further, the angle θ2 is obtained by the arccosine of (segment P0q2)/(segment P0P2). The arithmetic formula for angle θ2 is represented by Formula (2) below.

$$\theta 2 = \cos^{-1}\left( \frac{\overline{P0q2}}{\overline{P0P2}} \right)$$
$$= \cos^{-1}\left( \frac{|d0-d2|}{\sqrt{1^2+(d0-d2)^2}} \right) \tag{2}$$

Then, the angle θ can be obtained by: θ = θ1 + θ2 (Formula (3)). In this respect, an angle exceeding 90 degrees (π/2 radian) is interpreted as a relatively flat or as an area with an even density distribution in the present embodiment of the present invention. Hence, the technique imposes a maximum value of 90 degrees on this angle θ .

$$\theta = \theta 1 + \theta 2 \tag{3}$$

The correction coefficient δ =(90 - θ )/90 is obtained by replacing all angles greater than 90 degrees by 90 degrees.
That is, the angle θ is to have a value exceeding 0 degree and below 90 degrees. This angle θ indicative of the unevenness degree of the pixel value of the target pixel will be calculated for all of the directions described above. And, a minimum value among them will be interpreted as the final angle θ representative of the unevenness degree of this target pixel. Then, based on this minimum angle θ representing the maximum unevenness, a corrected pixel value will be calculated as follows. First, a correction coefficient δ will be obtained from the minimum value angle by the formula:

$$\text{Correction Coefficient}(\delta) = (90 - \theta)/90 \tag{4}.$$

Accordingly, the correction coefficient δ will take on values between 0 and 1.
The correction coefficient δ would have a value close to 1 when the target pixel has an unusually high density value like with a granular noise. Then, various formulae are conceivable as a formula for obtaining a corrected pixel value for the target pixel by using this correction coefficient $\delta$. On such example is given by the following formula to calculate the corrected pixel value.

$$cv = ((d1 + d2)/2)* \delta + d0*(1- \delta) \tag{5}$$

where cy is a corrected pixel value, d1 is a pixel value of the first basis pixel, d2 is a pixel value of the second basis pixel and d0 is a pixel value of the target pixel.

The corrected pixel value described above will be obtained for each color component for each and every pixel constituting the photographic image data. This method provides a noise suppressing technique capable of suppressing granular noises present for example in a contour portion, which was difficult with the conventional techniques. A good photographic image with sharpened contour and restricted granular noise can be obtained when a sharpness enhancing operation is applied to the photographic image data subjected to this granular noise suppressing operation.

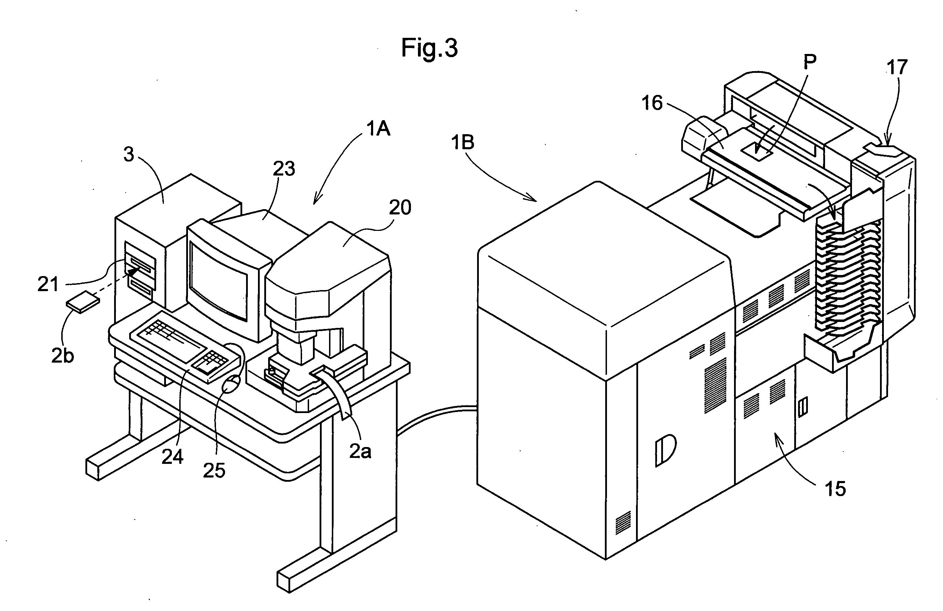

Next, a photographic printing system having an image processing unit employing the above-described granular noise suppressing image processing function is described next. Fig. 3 is an outer appearance view of this photographic printing system. This photographic printing system consists mainly of a print station 1B acting as a photographic printer for effecting an exposure and a development on a print paper P and a control station 1A for processing photographic images from a developed photographic film 2a or an image storage medium such as a memory card 2b for a digital camera and generating and transmitting print data to be used in the print station 1B.

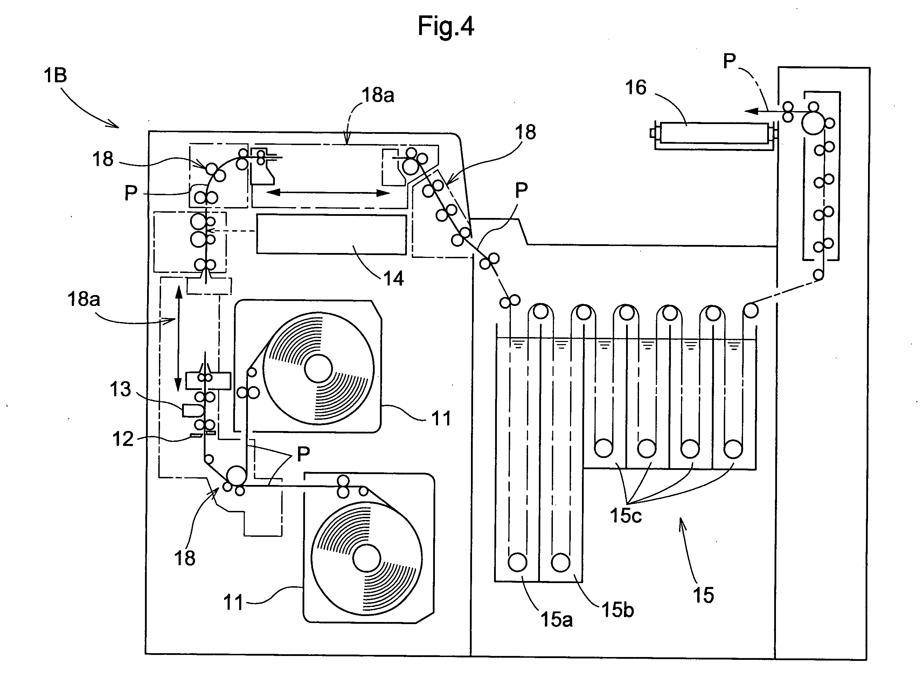

This photographic printing system is commonly referred to as "digital mini lab". As can be easily understood from Fig. 4, with the print station 1B in operation, an elongate sheet of print paper P stored in the form of a roll within one of two print paper magazines 11 is drawn out and cut by a sheet cuter 12 into pieces of a print size. Then, for each print paper piece P, a back printing unit 13 prints print-related information such as color correction information, a serial frame number etc. on its back side, while a print exposing unit 14 exposes the front side of the print paper P with a photographic image. The print paper P after this exposure is then sent into a developing tank unit 15 having a plurality of developing solution tanks for its development. The developed print paper P is then dried and sent to a transverse conveyer 16 mounted at an upper portion of the apparatus and then to a sorter 17. Such print papers P, i.e. photo prints P, sent to the sorter 17 are sorted by the unit of each customer's order and stacked on one of a plurality of trays of this sorter 17 (see Fig. 3).

A print paper conveying mechanism 18 is provided for conveying the print paper 2 at a conveying speed adapted for each of the above-described various processes to be effected on the print paper P. This print paper conveying mechanism 18 is comprised of a plurality of pinch conveyer roller pairs including chucker type print paper conveying units 18a disposed forwardly and rearwardly of the print exposing unit 14 relative to the print paper conveying direction.

The print exposing unit 14 includes a line exposing head for irradiating, along a main scanning direction, laser beams of three primary colors: R (red), G (green) and B (blue) on the print paper P being conveyed along a sub-scanning direction based on the print data transmitted from the control station 1A. The developing tank unit 15 includes a color developing solution tank 15a reserving therein color developing solution, a bleaching solution tank 15b reserving therein bleaching solution, and stabilizing solution tanks 15c reserving stabilizing solution therein.

On a desk-like console of the control station 1A, there is mounted a film scanner 20 capable of obtaining photographic image data (to be referred to simply as "image data" hereinafter) representing photographic frame images from the film 2a with a resolution exceeding 2000 dpi. On the other hand, a media reader 21 for obtaining image data representing photographic frame images from various types of semiconductor memories employed as photographic image recording media 2b attached to e.g. a digital camera, a CD-R or the like is incorporated within a general-purpose computer acting as a controller 3 of this photographic printing system. This general-purpose computer is connected also to a monitor 23 for displaying various kinds of information, a keyboard 24 and a mouse 25 acting as operation input devices used as operation inputting sections for effecting various settings and adjustments.

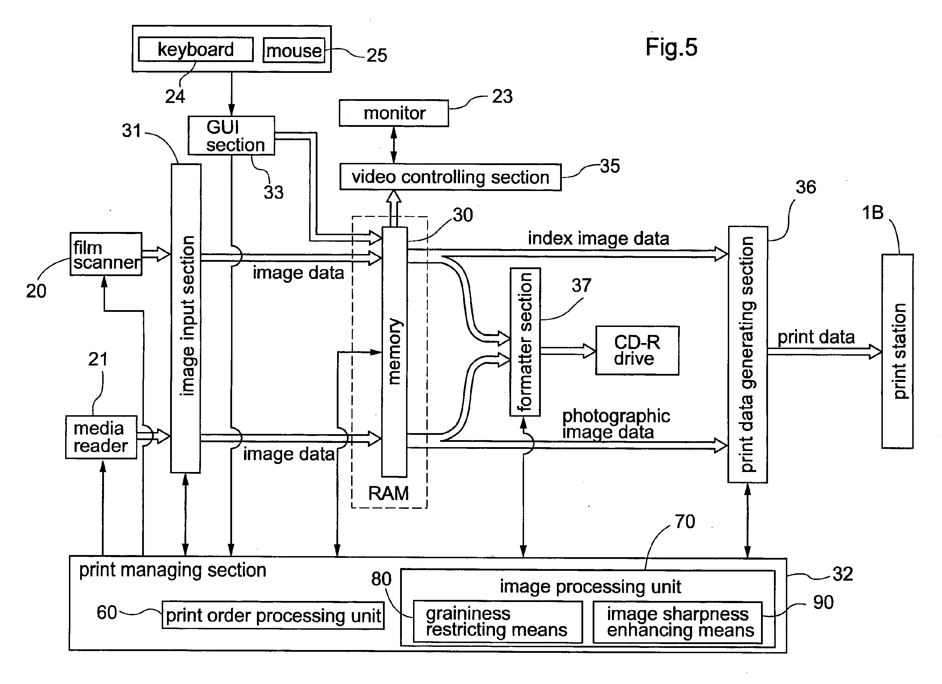

The controller 3 of this photographic printing system includes a CPU as a main component thereof and various functional elements realized by software and/or hardware for effecting various operations of the photographic printing system. As some of these functional elements particularly relevant to the present invention, the controller 3 includes the following sections as shown in Fig. 5.

An image inputting section 31 inputs the photographic image data read by the film scanner 20 or the media reader 21 and effects a necessary pre-processing thereon for a subsequent processing. A GUI section 32 constituting a graphic user interface produces a graphic control screen including various windows, boxes, control buttons or the like and generates control commands according to user's control commands (by way of the pointing devices such as the keyboard 24 and the mouse 25) entered via the graphic control screen. A print managing section 32 effects e.g. an image processing on image data transmitted from the image inputting section 31 to a memory 30 in order to generate desired print data, in accordance with an operational command sent from the GUI section 32 or directly input from e.

g. the keyboard 24. A video control section 35 generates video signals for causing the monitor 23 to display the correction reproduced images based on the corrected image data, a print source image and a simulated image as an anticipated finished image during a prejudge printing operation for e.g. a color correction as well as graphic data transmitted from the GUI section 32. A print data generating section 36 generates print data suitable for the print exposing unit 14 included in the print station 1B based on the final corrected image data. A formatter section 37 converts the source photographic image data or the corrected photographic image data after completion of the image correction into a format to be written into e.g. a CD-R, according to a customer's request.

In case the medium recording the photographic frame images is the film 2a, the image inputting section 31 scans the film 2a in a pre-scanning mode and a main scanning mode and then transmits the resultant scanned data obtained in these modes separately to the memory 30 for a subsequent pre-processing adapted to each purpose. In case the medium recording the photographic frame images is the memory card 2b or the like, if the photographic image data includes thumbnail data (low resolution data), the image inputting section 31 transmits this thumbnail data to the memory 30 separately from the main photographic image data (high resolution data) so that the thumbnail data may be used for the purpose of list display (matrix-like display) on the monitor 32. On the other hand, if the photographic image data do not include such thumbnail data, the image inputting section 31 creates reduced images from the main data and transmits these data as thumbnail data to the memory 30.

The print managing section 32 includes a print order processing unit 60 for managing print sizes, the number of prints, etc. and an image processing unit 70 for effecting various image processing operations on the image data mapped in the memory 30.

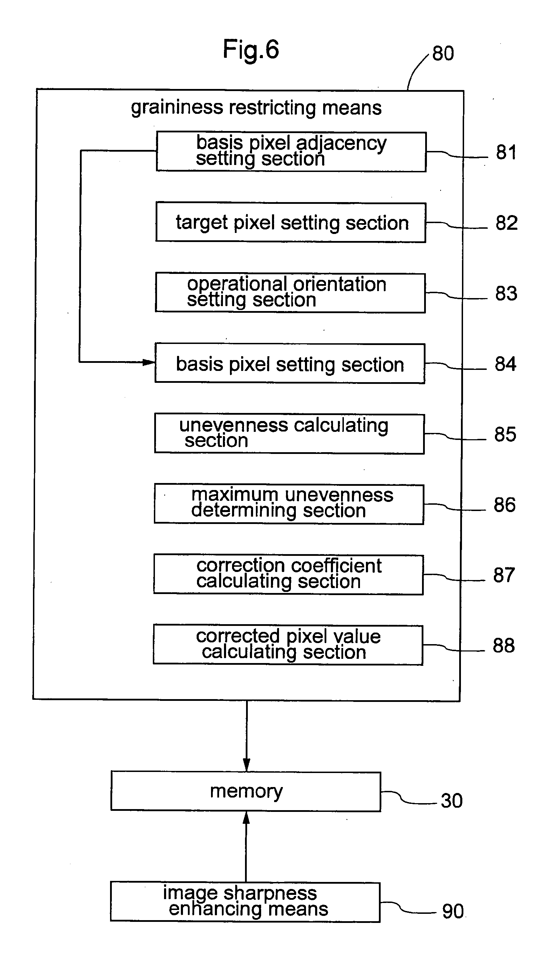

The image processing unit 70 includes a graininess suppressing means 80 implementing the technique according to the present invention, an image sharpness enhancing means 90 and means for realizing other photo retouching functions. The graininess suppressing means 80 is installed substantially as a program in the image processing unit 70. As shown in Fig. 6, the graininess suppressing means 80 includes an basis pixel adjacency setting section 81 for determining an closeness from a target pixel in setting the basis pixels depending on a resolution used by the film scanner 20 in acquiring image data and a type of the film, a target pixel setting section 82 for setting a target pixel from a group of pixels constituting the image data mapped in the memory 30, an operational orientation setting section 83 for setting a plurality of directions extending radially from the target pixel, an basis pixel setting section 84 for setting a pair of basis pixels across the target pixel on each of the set plural directions based on a closeness (distance from the target pixel) determined by the basis pixel adjacency setting section 81, an unevenness degree calculating section 85 for calculating an unevenness degree (expressed as an angle) of a pixel value of the target pixel relative to pixel values of the two basis pixels, a maximum unevenness degree determining section 86 for obtaining, as a maximum unevenness degree, a maximum value of unevenness degrees calculated for all of the plural directions set by the operational orientation setting section 83, a correction coefficient calculating section 87 for calculating a correction coefficient for the target pixel based on the maximum unevenness degree, and a corrected pixel value calculating section 88 for calculating a corrected pixel value for the target pixel based on the pixel values and the maximum unevenness degree of the target pixel and the basis pixels associated therewith and the correction coefficient calculated by the correction coefficient calculating section 87.

Incidentally, in the instant embodiment, a correction coefficient is obtained from a maximum unevenness degree and then, a corrected image value for the target pixel is calculated by using this correction coefficient. Instead, it is also possible to calculate a corrected pixel value for the target pixel by directly using the maximum unevenness degree.

Next, there will be described a procedure of an image processing for granular noise suppression by the graininess suppressing means 80 having the above-described construction. Incidentally, in case image data comprise color image data, each pixel thereof has a density value for each of color components such as R, G, B. Hence, the operation is needed for each color component. For the simplicity of explanation, however, the following discussion concerns a procedure effected for one particular color component.

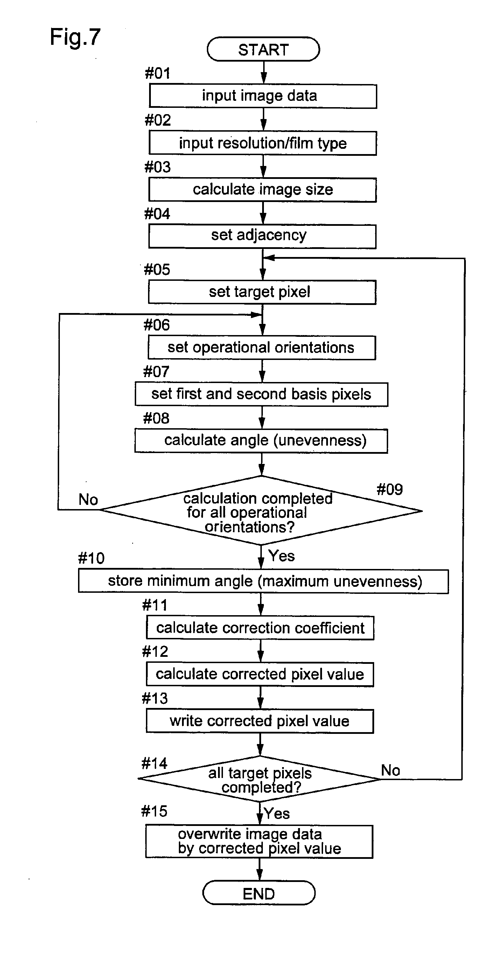

Fig. 7 illustrates the flow of this image processing. First, image data is input through the film scanner 20, the media reader 21 or the like and mapped in the memory 30 (step #01). As an initial setting operation, in the case of image data input through the film scanner 20, its image resolution and the film type are input automatically or manually to the basis pixel adjacency setting section 81 (step #02) and the two-dimensional size of the image data mapped in the memory 30 is calculated in advance (step #03). Then, the basis pixel adjacency setting section 81 sets a closeness, i.e. an inter-pixel distance from a target pixel to each basis pixel, based on the scanning resolution and the film type (step #04).

The target pixel setting section 82 selects one target pixel one at a time from the image data mapped in the memory 30 (step #05). The operational orientation setting section 83 selects a plurality of operational orientations, e. g. four operational orientations in the case of the example shown in Fig. 1, for each target pixel (step #06). The basis pixel setting section 84 selects two basis pixels, i.e. a first basis pixel and a second basis pixel, located on each operational orientation with one pixel on one side of the target pixel and the other pixel on the other side, based on a closeness set in advance, e.g. one pixel in the case of the example shown in Fig. 1 (step #07). The unevenness degree calculating section 85 calculates an angle θ to determine the unevenness degree, by substituting the pixel values of the target pixel and of the first and second basis pixels into Formulae (1) through (3) shown in Fig. 2 (step #08). This calculation of the angle θ is performed for all of the four operational orientations. The process checks if the calculation of the angle θ has been completed for all of the operational orientations. The steps #06 through #08 will be repeated until calculations of the angle θ for all of the operational orientations (step #09) are complete. Upon completion of the calculation of the angle θ for all of the operational orientations, an angle θ closest to 0 is stored at a particular memory section as a minimum absolute value corresponding to the maximum unevenness degree (step #10). This minimum angle (maximum unevenness degree) represents the "graininess" of the target pixel. If this angle has a value of 0 degree (though this value is not actually attained), this means that the target pixel has a pixel value very different from (either considerably less than or greater than) the pixel values of the pixels adjacent thereto. Hence, such target pixel can be interpreted as a "granular noise". On the other hand, if this angle has a value between 90 degree and 180 degree, this means that the pixel value of the target pixel is not considered to be unusually different from those of the adjacent pixels. Hence, such target pixel is not considered to be "granular noise" in the embodiment.

After the minimum absolute angle θ is obtained as the maximum unevenness degree representative of the graininess of the target pixel, the correction coefficient calculating section 87 calculates a correction coefficient δ by using the above-described Formula (4), after limiting this minimum absolute angle θ to 90 degrees (step #11). Subsequently, the corrected pixel value calculating section 88 calculates a corrected pixel value cv for the target pixel by assigning the pixel values of the target pixel and of the basis pixels and the correction coefficient δ calculated by the correction coefficient calculating section 87 to Formula (5) (step #12). This calculated corrected pixel value vc is stored at an address allocated in a corrected pixel data area within the memory 30 in correspondence with the coordinates of this particular target pixel.

The above-described operations from step #05 through step #13 are performed for all of the pixels, as target pixels, constituting the image data mapped in the memory 30a and will be repeated until corrected pixel values thereof are calculated (NO branched at step #14). Upon completion of calculations of corrected pixel values of all pixels and subsequent storage thereon in the corrected image pixel data area (YES branched at step #14), the pixel values of the initially input image data are replaced or "overwritten" by these corrected pixel values stored in the corrected image pixel data area, whereby the graininess suppressing operation is completed (step #15). Incidentally, as mentioned above, in case the image data comprise color image data, the routine from steps #05 through #14 will be effected for each color component (e.g. R, G, B) and the color image data mapped in the memory 30 will be overwritten by corrected pixel values for the respective color components.

Thereafter, the image data whose graininess has been restricted by the graininess suppressing process described above is subjected to a sharpness enhancing operation by the image sharpness enhancing means 90 for enhancing the sharpness of a contour, etc. for further quality improvement as a photographic image. If necessary, the data will be further subjected to e.g. a color correction. Then, thus processed image data will eventually be transmitted to the print data generating section 36.

In the foregoing embodiment, the density value shown along the vertical axis of the graph of Fig. 2 is expressed an 8-bit data, i.e. having values from 0 to 255. Instead, the density value used in the graph of Fig. 2 can be a value of a natural log of a density value expressed as a 12-bit data.

In the foregoing embodiment, the unevenness degree of a pixel value of a target pixel relative to pixel values of basis pixels is obtained as an angle θ formed by the points in the graph of the pixel values of the first and second basis pixels relative to the point of the target pixel in the same. Instead, the unevenness degree can be obtained also as e.g. a difference between the pixel value of each of the first and second basis pixels and the pixel value of the target pixel or any other operational value indicative of a degree of "projection" or "prominence" of the pixel value of the target pixel. Namely, the essential concept of the present invention lies in that the calculation of the prominence (unevenness) of the pixel value of the target pixel does not utilize peripheral pixels present within a two-dimensional space as employed by an (n x n) spatial filter, but utilize peripheral or adjacent pixels present along a straight line across the target pixel. Therefore, any modifications based on such essential concept are understood to be within the scope of the present invention defined in the appended claims.

Further, the granular noise suppressing image processing technique of this invention will be most effective for image data obtained from a photographic film by a film scanner, indeed. However, as CCD noise is similar to the granular noise, the invention's technique will be used advantageously also for image data acquired by an image capturing apparatus using CCD imaging elements, such as a digital camera. Hence, the invention does not exclude graininess suppressing process of such image data.

In the forgoing embodiment, the granular noise suppressing image processing technique of the invention is employed in a photographic printing system of the so-called silver photo print type wherein a print paper P is exposed by the print exposing unit 14 having an exposure engine and this exposed print paper P is subjected to a series of developing steps. Instead, the invention's technique can be employed also in various other types of photographic printers or printing systems such as the ink jet printing type configured for forming an image by jetting ink onto a film or a paper sheet, the heat transfer type using a thermographic sheet.

Further, the invention can be applied not only to image data of a still photograph, but image data of a video image by treating each frame thereof as a still image.

The granular noise suppressing image processing method described above can be embodied as a software of this processing method and can be distributed as a software recorded and stored in a storage medium such as an optical disc like CD ROM, DVD, etc. so that the method can be executed on a general-purpose computer.

Moreover, the invention further includes an embodiment of the granular noise suppressing image processing method implemented as a software to be distributed via a communication medium such as Internet.

## Claims

1. An image processing method for suppressing granular noise in photographic image data, the method **characterized by** the steps of:

   selecting a target pixel from a group of pixels constituting the photographic image data;
   selecting a plurality of directions extending from the target pixel;
   selecting a pair of basis pixels located on each of the selected plural directions, with one pixel located on one side of the target pixel and the other pixel located on the opposite side of the target pixel;
   calculating an unevenness degree of a pixel value of the target pixel relative to pixel values of the basis pixels;
   obtaining, as a maximum unevenness degree, a maximum value of unevenness degrees calculated for all of the plurality of directions; and
   calculating a corrected pixel value for the target pixel based on the pixel values of the target pixel and the basis pixels and on the maximum unevenness degree.

2. The image processing method according to claim 1, **characterized in that** each of said two basis pixels is adjacent to said target pixel.

3. The image processing method according to claim 1, **characterized in that** the greater said maximum unevenness degree is, the greater an effect on said corrected pixel value from the pixel values of said basis pixels is.

4. The image processing method according to claim 1, **characterized in that** said unevenness degree depends on an angle formed by a line segment extending between one of the two basis pixels and the target pixel and a further line segment extending between the other basis pixel and the target pixel in a two-dimensional space with one axis representing pixel values and the other axis representing positions.

5. The image processing method according to claim 1, **characterized in that** a closeness between the target pixel and each basis pixel when selecting the basis pixels is adjusted depending on at least one of data resolution and a film type.

6. The image processing method according to claim 1, **characterized in that** when said photographic image data has color image data, said unevenness degree and said corrected pixel value are obtained for each color component.

7. The image processing method according to claim 4, **characterized in that** said plurality of directions include a direction along one axis of said two-dimensional space and a further direction along the other axis of the two-dimensional space.

8. The image processing method according to claim 7, **characterized in that** said plurality of directions include a still further direction between said one axis and said other axis.

9. The image processing method according to claim 1, further comprising a step of enhancing sharpness of the photographic image data to which said corrected pixel values have been applied.

10. An image processing system including instructions executable by a processing unit for suppressing granular noise in photographic image data,:

the processing unit;
a memory capable of communicating with said processing unit and storing said photographic image data;

**characterized by**
means for selecting a target pixel from a group of pixels constituting the photographic image data;
means for selecting a plurality of directions extending from the target pixel;
means for selecting a pair of basis pixels located on each of the selected plural directions, with one pixel located on one side of the target pixel and the other pixel located on the opposite side of the target pixel;
means for calculating an unevenness degree of a pixel value of the target pixel relative to pixel values of the basis pixels;
means for obtaining, as a maximum unevenness degree, a maximum value of unevenness degrees calculated for all of the plurality of directions; and
means for calculating a corrected pixel value for the target pixel based on the pixel values of the target pixel and the basis pixels and on the maximum unevenness degree.

11. The image processing system according to claim 10, wherein each of said two basis pixels is adjacent to said target pixel.

12. The image processing system according to claim 10, wherein the greater said maximum unevenness degree is, the greater an effect on said corrected pixel value from the pixel values of said basis pixels is.

13. The image processing system according to claim 10, wherein said unevenness degree depends on an angle formed by a line segment extending between one of the two basis pixels and the target pixel and a further line segment extending between the other basis pixel and the target pixel in a two-dimensional space with one axis representing pixel values and the other axis representing positions.

14. The image processing system according to claim 10, wherein a closeness between the target pixel and each basis pixel when selecting the basis pixels is adjusted depending on at least one of data resolution and a film type.

15. The image processing system according to claim 10, wherein when said photographic image data has color image data, said unevenness degree and said corrected pixel value are obtained for each color component.

16. The image processing system according to claim 13, wherein said plurality of directions include a direction along one axis of said two-dimensional space and a further direction along the other axis of the two-dimensional space.

17. The image processing system according to claim 16, wherein said plurality of directions include a still further direction between said one axis and said other axis.

18. The image processing system according to claim 10, wherein said instructions executable by said processing unit further includes a step of enhancing sharpness of the photographic image data to which said corrected pixel values have been applied.

19. The image processing system according to claim 10, further comprising at least one of a scanner for reading image data from a photographic film and a media reader for obtaining image data from an image recording medium.

20. A print station comprising the image processing system according to claim 10, an exposure unit for effecting exposure a print paper and a development solution tank unit for effecting development of the exposed print paper.

21. A computer program product loadable to a memory of a digital computer, **characterized in that** the product includes software code portions, when executed on the computer, effects the steps of the method according to claim 1.

# Fig.1

Orientation 3

photographic image data

Orientation 4

Orientation 2

Target pixel
P0(d0)

Second basis pixel
P2(d2)

Orientation 1

First basis pixel
P1(d1)

# Fig.2

Positions of basis pixels

Fig.3

# Fig.4

EP 1 580 689 A2

Fig.5

# Fig.6

80

graininess restricting means

| basis pixel adjacency setting section | 81 |

| target pixel setting section | 82 |

| operational orientation setting section | 83 |

| basis pixel setting section | 84 |

| unevenness calculating section | 85 |

| maximum unevenness determining section | 86 |

| correction coefficient calculating section | 87 |

| corrected pixel value calculating section | 88 |

memory ——— 30

image sharpness enhancing means ——— 90

## Fig.7

START

#01 input image data

#02 input resolution/film type

#03 calculate image size

#04 set adjacency

#05 set target pixel

#06 set operational orientations

#07 set first and second basis pixels

#08 calculate angle (unevenness)

#09 calculation completed for all operational orientations?

No

Yes

#10 store minimum angle (maximum unevenness)

#11 calculate correction coefficient

#12 calculate corrected pixel value

#13 write corrected pixel value

#14 all target pixels completed?

No

Yes

#15 overwrite image data by corrected pixel value

END